# EUROPEAN PATENT SPECIFICATION

(11) **EP 2 788 808 B1**
(45) Date of publication and mention of the grant of the patent: **29.04.2015**
(21) Application number: 12788038.3
(22) Date of filing: 06.11.2012
(51) Int. Cl.: G02B 6/44

(54) **FIBRE-OPTIC DISTRIBUTION ENCLOSURE**
GLASFASERVERTEILERGEHÄUSE
COFFRET DE RÉPARTITION À FIBRES OPTIQUES

(30) Priority: 06.12.2011 EP 11192083
(43) Date of publication of application: 15.10.2014
(73) Proprietor: 3M Innovative Properties Company, Saint Paul, MN 55133-3427 (US)
(72) Inventor: DESARD, Christophe, F-95006 Cergy Pontoise Cedex (FR); FRUTOS FERNÁNDEZ, Enrique, E-28027 Madrid (ES); BONVALLAT, Pierre, CEP 13001-970 Sumaré São Paulo (BR); BIZARRIA, Felipe Salgado Rennó, CEP 13001-970 Sumaré São Paulo (BR)
(74) Representative: Müller, Bruno
(86) International application number: PCT/US2012/063671
(87) International publication number: WO 2013/085649

(56) References cited:
- DE-A1- 3 412 159
- DE-U1- 20 016 755
- US-B1- 6 311 008
- US-B1- 6 438 310
- US-B1- 6 504 987

## Description

### BACKGROUND OF THE INVENTION

### Field of the Invention

The invention relates to enclosures for fibre-optic telecommunication cables in fibre-optic networks.

### Background

Fibre-optic telecommunication cables are used for distributing voice and data signals across communication networks. A fibre-optic telecommunication cable typically includes a number of individual optical fibres that are encased within a protective sheath. As telecommunication cables are routed across communication networks, it is necessary to open the cable at certain locations so that one or more optical fibres therein may be cut and connected to other fibres, i.e. spliced, thereby allowing signals to be distributed to other fibres or "branches" of the communication network. Cable branches may be further distributed until the network reaches individual homes, businesses, offices, premises, and so on.

At each point where a fibre-optic telecommunication cable is opened, some type of enclosure is provided to protect the exposed interior of the cable. Commonly, the enclosure has one or more ports through which fibre-optic telecommunication cables, which can also be called feeder cables, distribution cables, branch cables or riser cables, enter and/or exit the enclosure. Inside the enclosure, the feeder cable is opened to expose the optical fibres therein. Conventional telecommunication enclosures are constructed to facilitate the management and protection of individual optical fibres and splices contained therein.

For some fibre-to-the-x (FTTX) deployments, a service provider can install a fibre-optic distribution enclosure (also known as a fibre distribution terminal or FDT or fibre building entrance terminal or BET) at the ground floor, on each floor, or every few floors of a multi-dwelling unit (MDU), residence, or business. In the fibre-optic distribution enclosure, the building riser cable or feeder cable is connected to drop cables which run to each living unit (in the MDU or on a particular floor). A drop cable can be connected to the riser cable via a splice within the fibre-optic distribution enclosure only when a telecommunication service is requested from the tenant of the living unit to which the drop cable runs.

Fibre-optic distribution enclosures can be located in distribution closets or cabinets. Connecting MDUs to the fibre-optic network can be difficult, because space in distribution closets is often limited, and the routing of feeder cables in the closet is not flexible. In a distribution closet, it may be required that a feeder cable enters a fibre-optic distribution enclosure from the bottom or from the top of the enclosure only. A fibre-optic distribution enclosure may thus have to be installed in a place in the closet where it is difficult to open it, e.g. by removing its cover. Once the enclosure is opened, an installer is to create a splice between the ends of two individual fibres in the enclosure. In some types of fibre-optic distribution enclosures, areas for accommodating such splices are provided in one or more fibre cassettes or fibre trays, which are movable relative to the rest of the enclosure. Normally, in one position of the tray, the "access" position, splice areas on the fibre tray are easily accessible to an installer, while in another position, a "storage" position, a splice area on the tray can be obstructed by a part of the enclosure, or parts of the enclosure are covered by the tray and are therefore less accessible, but the fibre tray rests in a storage volume within the enclosure in a space-saving manner. Most such enclosures can only be closed when all trays are in their storage positions.

Some fibre-optic distribution closets provide so little space, that moving a fibre tray out of its "storage" position into the "access" position is not possible. An installer may in such a case try to mount the entire enclosure in a different orientation, so that the fibre tray moves out of the storage position in a different direction. This, however, is often impossible, too, because the enclosure must have a specific orientation with respect to the feeder cable, e.g. due to the enclosure's entrance port for the feeder cable being located in one corner of the enclosure.

Other distribution closets have the feeder cables located in a corner of the closet, such that a fibre distribution enclosure can only be mounted in one orientation. This orientation then prescribes a direction in which the fibre tray can move out of its storage position. If there is little space for movement in that prescribed direction, it may be difficult for an installer to move the tray out of its storage position and access certain parts of the fibre tray or of the interior of the enclosure.

In an effort to increase flexibility for an installer, a fibre-optic distribution enclosure was developed that allows to remove fibre trays and a cable management device from the enclosure altogether, so that installation and/or splicing of fibres can be done outside the enclosure. This enclosure is disclosed in the European patent application EP 2 166 389.

A further fibre-optic distribution enclosure is disclosed in U.S. patent 7,970,249. This enclosure includes a splice tray stack pivotally mounted within the housing of the enclosure and a cable management tray that mounts within the housing beneath the splice tray stack. Enclosures with pivotally mounted splice trays are also found in DE 200167550, US6504987 and US6311008.

### SUMMARY

An object of the present invention is to provide a fibre-optic distribution enclosure that offers a higher degree of flexibility during installation in locations where little space is available for moving a fibre tray out of its storage position.

The present invention provides a fibre-optic distribution enclosure as defined in claim 1, comprising a fibre tray, a storage volume for storing the fibre tray in the fibre-optic distribution enclosure when the fibre tray is in a first tray storage position, and first fibre tray support means for movably fixing the fibre tray in the enclosure, such that the fibre tray can be moved into the first tray storage position in the storage volume, wherein the enclosure comprises second fibre tray support means for movably fixing the fibre tray in the enclosure, such that the fibre tray can be moved into a second tray storage position in the storage volume, and such that the fibre tray occupies a first space in the first storage position, and a second space in the second storage position, and that the first space and the second space intersect.

The enclosure of the present invention increases flexibility in the installation of fibre-optic distribution enclosures, because a fibre tray can be fixed in the enclosure by a first set of fibre tray support means or alternatively by a second set of fibre tray support means, so that the fibre tray can be moved into a first tray storage position when it is fixed by the first set of tray support means, or into a second tray storage position, when it is fixed by the second set of tray support means. Independent from the set of support means by which the tray is fixed, the tray occupies a same, i.e. a common, space in the storage volume in the first and in the second storage position. The common space is the space of the intersection of the space occupied by the fibre tray when in the first storage position, and the space occupied by the same tray when in the second storage position. Because these two spaces intersect, the enclosure can have a small size, and still provide enough space for two tray storage positions. The first and second sets of tray support means may, for example, be arranged on opposite sides of the enclosure. In such an arrangement, the tray may be moved, e.g. pivoted or slid, from the storage volume out of the first storage position towards one side, if the tray is fixed to the first set of support means, or from the same storage volume out of the second storage position towards the opposite side if fixed to the second set of support means. If the limited space in a fibre-optic distribution closet does not allow moving a tray out of a storage position towards one side when it is fixed to one set of tray support means, the tray can be fixed to the other set of support means during installation and may then be moved out of a storage position towards the other side, without having to uninstall the entire enclosure and having to install it in a different orientation or having to use a different enclosure.

The fibre-optic distribution enclosure of the present invention may be adapted to be mounted on a wall, like, for example, on a wall of a staircase of a building.

The fibre-optic distribution enclosure of the present invention comprises a fibre tray. The fibre tray may be a splice tray. The fibre tray may comprise means for accommodating one or more splices between optical fibres. The fibre tray has a flat carrier plate which has two major sides, opposite to each other. Each major side of the carrier plate may comprise means for accommodating one or more splices, passive optical splitters, means for routing or guiding an optical fibre, means for splitting an optical fibre, and/or means for storing slack or overlength. In a specific embodiment, the carrier plate may comprise, on one major side, means for storing slack or overlength, and on the opposite major side, means for accommodating one or more splices or passive optical splitters. In another specific embodiment, the carrier plate may comprise on one major side means for accommodating one or more splices, means for routing or guiding an optical fibre, and means for storing slack or overlength.

The fibre tray may comprise connection means for movable engagement with the first or second fibre tray support means. The movable engagement may be, for example, a slideable engagement or a pivotable engagement. The fibre tray may comprise connection means for slideable engagement with the first or second fibre tray support means. The fibre tray may comprise connection means for pivotable engagement with the first or second fibre tray support means. The connection means may comprise a hinge pin or two hinge pins. Two hinge pins may be arranged coaxially with each other. The fibre tray may comprise first connection means for movable engagement with the first fibre tray support means. The first connection means for movable engagement with the first fibre tray support means may be adapted for movable engagement with the second fibre tray support means. The fibre tray may comprise first connection means for movable engagement with the first fibre tray support means and second connection means for movable engagement with the second fibre tray support means.

The fibre-optic distribution enclosure of the present invention comprises a storage volume for storing the fibre tray in the enclosure when the tray is in a first tray storage position or in a second tray storage position. The storage volume may be adapted such that the fibre tray can be moved, e.g. pivoted, into the first tray storage position in the storage volume, when the fibre tray is fixed by the first fibre tray support means, and/or such that the fibre tray can be moved, e.g. pivoted, into the second tray storage position in the storage volume, when the fibre tray is fixed by the second fibre tray support means.

A storage position, in general, is a position into which the fibre tray is brought when no access is required to the fibre tray itself, to a part of the fibre tray, to a component mounted on the fibre tray or to components mounted such that they are obstructed or covered by the fibre tray, when the fibre tray is in the storage position. A storage position may be a position into which the fibre tray is brought before the enclosure is closed.

The fibre-optic distribution enclosure of the present invention may comprise an enclosure base. The first fibre tray support means and/or the second fibre tray support means may be connected to the enclosure base. The enclosure base may comprise optical fibre management means. It may, for example, comprise means for routing or guiding an optical fibre. It may comprise a hub around which an optical fibre can be guided by an angle of 360°. The enclosure base may comprise a support plate and means for routing or guiding an optical fibre on two distinct levels, relative to the support plate.

The fibre tray occupies a certain space. This space comprises, as defined for the purpose of this patent application, the space occupied by the solid parts of the fibre tray plus the space between any two solid parts of the fibre tray. Voids or empty spaces within that space are considered to belong to the space occupied by the fibre tray. As an example, a fibre tray comprising a flat carrier plate and upstanding peripheral walls on that carrier plate occupies the space taken by the carrier plate and the peripheral walls and the entire space between any two parts of the upstanding walls.

In the fibre-optic enclosure according to the invention, in the first storage position, the fibre tray occupies a first space in the storage volume. In the second storage position, the fibre tray occupies a second, different space in the storage volume. The volume of the first and of the second space may be the same in both storage positions, but the position and orientation of the spaces may be different. The first space and the second space intersect, i.e. the first space and the second space have space in common. The larger the space of the intersection, the less space is required in the enclosure to accommodate a fibre tray occupying a given space in the first or in the second storage position. The volume of space common to the first and to the second space may be greater than 30% of the volume of the first space. It may be greater than 50% or greater than 75% or greater than 90% of the volume of the first space. This common portion of space may be considered a three-dimensional overlap between the respective occupied spaces. This arrangement may ensure that the enclosure offers two distinct fibre tray storage positions in its storage volume for the same fibre tray, without having to increase the storage volume and thus without having to increase the overall size of the enclosure.

The first fibre tray support means may be suitable for pivotably fixing the fibre tray in the enclosure, such that the fibre tray can be pivoted into the first tray storage position. The second fibre tray support means may be suitable for pivotably fixing the fibre tray in the enclosure, such that the fibre tray can be pivoted into the second tray storage position. Pivotable fixing of a fibre tray may be advantageous for storing the fibre tray in the first or in the second tray storage position in a space-saving manner and/or to allow access to the fibre tray while maintaining a mechanical connection between the fibre tray and the enclosure.

The first fibre tray support means may be arranged such that the fibre tray can be pivoted into the first tray storage position in a first direction of rotation, as viewed from a certain position. The second fibre tray support means may be arranged such that the fibre tray can be pivoted into the second tray storage position in a second direction of rotation, as viewed from the same position. The second direction of rotation may be different from or opposite to the first direction of rotation. A direction of rotation may be defined with respect to the enclosure. Different or opposite directions of rotation may allow for a space-saving arrangement of the fibre tray in the first or the second tray storage positions. Different or opposite directions of rotation may provide a higher degree of flexibility in positioning the fibre-optic distribution enclosure in a way that the fibre tray is movable out of a tray storage position and other elements of the enclosure or any fibres are accessible.

The enclosure base may comprise a first outer edge and a second outer edge. One or more of the edges may be straight. The second outer edge may be opposite to the first outer edge. The first fibre tray support means may be arranged in the vicinity of the first outer edge. The second fibre tray support means may be arranged in the vicinity of the second outer edge. The first and/or the second fibre tray support means may define a pivot axis of the fibre tray. The pivot axis may be oriented parallel to the outer edge of the enclosure base, in the vicinity of which outer edge the fibre tray support means are arranged.

The arrangement of tray support means in the vicinity of an outer edge of the enclosure base may provide a higher degree of flexibility in positioning the fibre-optic distribution enclosure in a way that the fibre tray is movable and other elements of the enclosure or any fibres are accessible. The arrangement of the first tray support means in the vicinity of a first outer edge of the enclosure base and the arrangement of the second tray support means in the vicinity of an opposite outer edge of the enclosure base may allow the storage volume of the enclosure to be used more efficiently and may provide a higher degree of flexibility in positioning the fibre-optic distribution enclosure in a way that the fibre tray is movable and other elements of the enclosure or any fibres are accessible.

The fibre tray has a flat carrier plate. The carrier plate lies in a first plane when the fibre tray is in the first tray storage position. The carrier plate lies in a second plane when the fibre tray is in the second tray storage position. The first and the second plane are identical. Such an arrangement may allow for the enclosure to have a small height, as measured perpendicularly from the bottom wall of the enclosure, while offering two alternative tray storage positions for the fibre tray.

The carrier plate of the fibre tray may have, in the first tray storage position, a first angular orientation with respect to the enclosure in the plane of the carrier plate. The carrier plate may have, in the second tray storage position, a second angular orientation with respect to the enclosure in the plane of the carrier plate. The first and the second angular orientations may be the same. Alternatively, the first and the second angular orientations may be offset by an angle which is a multiple of 90°. The orientations may in particular be offset by an angle of 90° or 180°. Having an angular offset of a multiple of 90° between the orientations of the fibre tray carrier plate may allow for a higher degree of flexibility in positioning the fibre optic distribution enclosure in an environment where space outside the enclosure is limited, because the fibre tray may be oriented such that, when moved out of one of the tray storage positions, it may require space only in areas where space is available, and may require little or no space in areas where little space is available. Also, manufacturing of the enclosure may be more cost-effective if common angles like 90°, 180° etc. are used.

The fibre tray may comprise a fibre entry/exit region, through which a fibre can be routed from the enclosure base to the fibre tray or out of the fibre tray to the enclosure base. The fibre entry/exit region may be in an elevated position relative to the enclosure base or to a support plate of a enclosure base. The enclosure base may comprise a first pair of ramps, wherein the first pair of ramps comprises first and second ramps. The first ramp may be arranged to guide a first fibre in a first direction to the entry/exit region of the fibre tray in the first storage position. The second ramp may be arranged to guide a second fibre in a second direction to the entry/exit region of the fibre tray in the first storage position. The first and the second directions may be generally opposite to each other. A ramp may be integrally formed with the enclosure base. Ramps are advantageous in that they allow guiding of fibres towards an entry/exit region of a fibre tray which may be mounted at an elevated level relative to the enclosure base. A ramp can be easily shaped such as to maintain a minimum bend radius of a fibre guided by the ramp. Having two ramps that guide fibres into the fibre tray from two different directions may increase the number of possible fibre guiding paths in the enclosure into the fibre tray, thereby increasing flexibility of fibre and cable guiding, and it eventually may minimize time and cost of installation of the fibre-optic distribution enclosure.

The enclosure base may further comprise a second pair of ramps, wherein the second pair of ramps comprises third and fourth ramps. The third ramp may be arranged to guide a third fibre in a third direction to the entry/exit region of the fibre tray mounted in the second storage position. The fourth ramp may be arranged to guide a fourth fibre in a fourth direction to the entry/exit region of the fibre tray mounted in the second storage position.

The third and the fourth direction may be generally opposite to each other. A second pair of opposed ramps provides the benefits of ramps as described above also when the fibre tray is fixed via the second fibre tray support means. This leads to enhanced flexibility in installing the fibre-optic enclosure in conditions where space is limited.

A ramp may comprise ramp walls for guiding a fibre laterally. The distance between the ramp walls at one end of the ramp may be smaller than the distance between the ramp walls at another end of the ramp. For a ramp for guiding fibres from a bottom level to an elevated level or vice versa, the distance between the ramp walls at an upper end of a ramp may be smaller than the distance between the ramp walls at a lower end of the ramp. Such arrangements of ramp walls makes fibre guiding in the enclosure base more flexible, easier, and quicker, because a wider end of a ramp can receive fibres from more incoming directions without violating a minimum bend radius. A narrower end of a ramp provides for more precise fibre guiding towards a specific point, e.g. towards a fibre entry/exit region of a fibre tray.

The fibre-optic distribution enclosure may comprise a mounting structure comprising a plurality of discrete mounting locations, adapted for mounting optical connector couplings therein. The mounting locations may be adapted for mounting standard optical connector couplings therein. The mounting structure may comprise a panel having an opening, which provides one or more discrete mounting locations, adapted for mounting optical connector couplings therein. A standard optical connector coupling may, for example, be a coupling for an SC connector or for an LC connector, with or without a protective shutter. A mounting structure as described above may accept fibre-optic connector couplings that are widely used. Thereby, time may be saved during connection of optical fibres to other fibres.

The fibre-optic distribution enclosure may comprise a cable retention device. The cable retention device may be adapted to be mounted in a mounting location for mounting optical connector couplings therein. The cable retention device may provide means for fixing a strength member and/or a sheath of a cable to the cable retention device. A mounting location in the mounting structure can be used to mount either an optical connector coupling or a cable retention device therein. This allows to lead a connectorized or unconnectorized optical cable into the enclosure.

The cable retention device may be manufactured in one piece with the enclosure base. After manufacturing it may be in a first location relative to the rest of the enclosure base. In that first location it may be mechanically connected to the enclosure base such that it can be separated manually from the enclosure base. After separation, it may be mounted in a second location relative to the rest of the enclosure base. The second location may be a discrete mounting location of a mounting structure of the fibre-optic distribution enclosure.

The enclosure base may be a single piece. This may make manufacturing and assembly of the enclosure base and of the fibre-optic distribution enclosure more economical, because less parts need to be manufactured and assembled to form the enclosure. The enclosure base may be, for example, molded as a single piece.

The fibre-optic distribution enclosure may have an outer wall. The enclosure may comprise a housing which comprises the outer wall. The enclosure base or a part of the enclosure base may form at least a part of the outer wall of the enclosure. This may make the presence of a dedicated, separate outer wall obsolete, thereby saving cost. A fibre-optic distribution enclosure, wherein a part of the enclosure base forms at least a part of an outer wall of the enclosure may be quicker to assemble.

The enclosure base may comprise fixing means for fixing the enclosure base directly to a wall or to any other substrate. Such fixing means may, for example, be one or more lugs, hooks, openings, protrusions or recesses. Such fixing means may make the provision of dedicated, separate fixing means obsolete, and may thereby save cost and installation time.

The enclosure base may comprise a flat support plate. The support plate may support all elements of the enclosure base on one side of the support plate. The support plate may be adapted to be fixed to a wall with the flat support plate adjacent to the wall. The enclosure base may be symmetric with respect to a plane perpendicular to the support plate. The enclosure base may be symmetric with respect to a first plane and to a second plane perpendicular to each other, wherein both planes are perpendicular to the support plate. Symmetry enhances flexibility when installing the fibre-optic distribution enclosure.

### BRIEF DESCRIPTION OF THE DRAWINGS

The invention will now be described in more detail with reference to the following Figures exemplifying particular embodiments of the invention:
Fig. 1 is a perspective view of one embodiment of a fibre-optic distribution enclosure according to the invention;
Fig. 2 is a perspective view of the interior of the enclosure of Fig. 1 with the fibre tray in the first storage position;
Fig. 3 is a perspective view of the interior of the enclosure of Fig. 2 with the fibre tray in an access position;
Fig. 4 is a perspective view of the enclosure base of the enclosure of Fig. 1;
Fig. 5 is a perspective view of the interior of the enclosure of Fig. 1 with the fibre tray in the second storage position;
Figs. 6a-f are schematic sketches of the storage volume and the fibre tray of one embodiment of an enclosure according to the invention;
Fig. 7 is a perspective view of cable retention devices mounted in the mounting structure of the enclosure of Fig. 1;
Fig. 8 is a perspective view of a cable retention device of Fig. 7;
Fig. 9 is a perspective view of an alternative cable retention device; and
Fig. 10 is a perspective view of the alternative cable retention device of Fig. 9, mounted in the mounting structure of the enclosure of Fig. 1.

### DETAILED DESCRIPTION OF THE EMBODIMENTS

Herein below various embodiments of the present invention are described and shown in the drawings wherein like elements are provided with the same reference numbers. Terms like "upper", "lower", "front", "rear", "left" or "right" refer to positions or directions of elements as they are represented in the respective Figure, and are used to ease the understanding of the Figures. The enclosure of the present invention and its elements may be mounted in any orientation, so that, for example, an element described as "lower" in this application may be located above or at the same height as an element that was described as "upper" in the application. These terms are therefore not to be understood as in any way limiting.

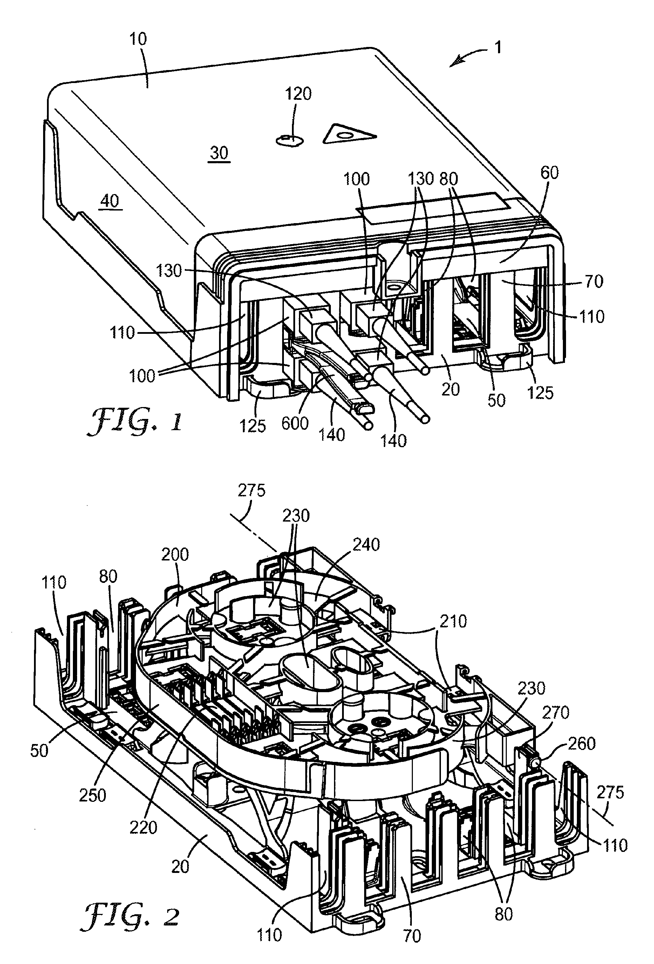

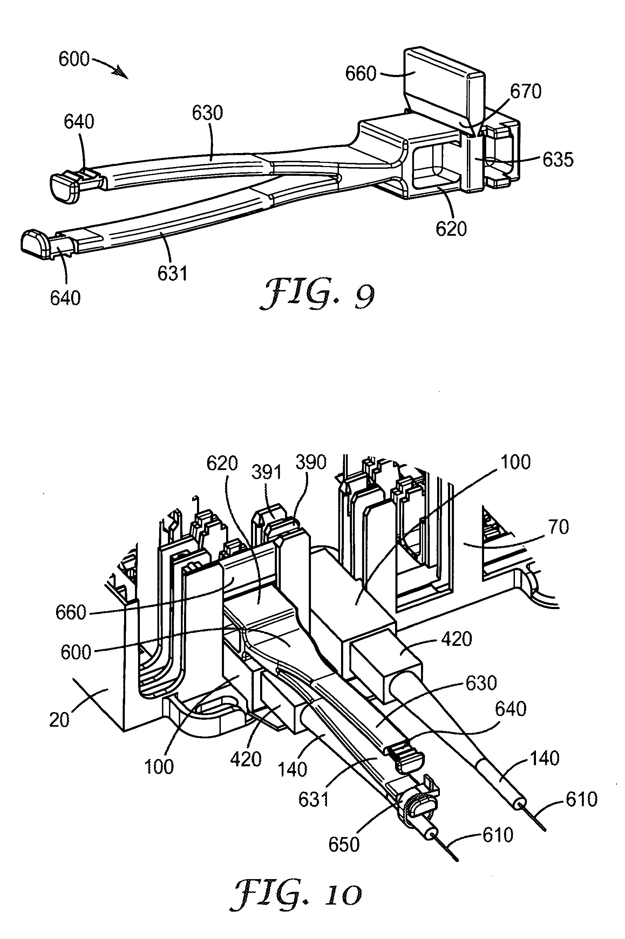

**Figure 1** shows a fibre-optic distribution enclosure 1 according to the invention. The enclosure 1 comprises a cover 10 and a enclosure base 20. The cover 10 forms a top wall 30, a front wall 60 and two side walls 40, of which only one is visible in the Figure. The enclosure base 20 comprises a flat support plate 50 and a rear wall, which is not visible in Figure 1. The enclosure base 20 comprises a mounting structure 70 for mounting cable retention devices 90 or optical connector couplings 100 therein. The mounting structure 70 comprises three drop fibre openings 80 in the shape of three longitudinal parallel recesses, through which optical fibres or cables can enter the enclosure 1. Each of the drop fibre openings 80 provides three discrete mounting locations, as is shown in Figure 10. Through each of the mounting locations, an optical fibre or cable can enter the enclosure 1. (The expression "enter the enclosure" is used for an optical fibre or a cable independently of the direction in which signals propagate in the fibre or the cable.) Entry of optical fibres or fibre-optic cables, e.g. drop cables, into the enclosure 1 is facilitated by cable retention devices 600 and/or optical connector couplings 100, which can be mounted in the drop fibre openings 80. Each cable retention device 90, 600 and each connector coupling 100 occupies at least one mounting location in a drop fibre opening 80. A feeder cable (not shown) can enter the enclosure 1 through one of two feeder cable openings 110, which are arranged next to the mounting structure 70, close to the side walls 40 of the enclosure 1. Feeder cable retention devices (not shown) can fix an incoming feeder cable to the enclosure base 20 by fixation of a strength member of the feeder cable to the enclosure base 20.

The mounting locations of the drop fibre openings 80 and the feeder cable openings 110 can be closed by cover panels (not shown), when not used.

The cover 10 is fixed to the enclosure base 20 by a screw buried in a deepening 120 in the top wall 30 of the cover 10. The enclosure base 20 can be fixed to a wall of a building via fastening tabs 125. Two of these fastening tabs 125 are arranged at the front of the enclosure 1, in the plane of the support plate 50. The tabs 125 form protrusions that comprise an opening for receiving screws, with which the enclosure base 20 and the fibre-optic distribution enclosure 1 can be fixed to a wall. If required because space around the enclosure 1 is limited, a fastening tab 125 may be separated from the enclosure base 20. The enclosure base 20 may alternatively be fixed to a wall by screws and openings (not shown) in the support plate 50 of the enclosure base 20.

In the embodiment shown in Figure 1, four optical connectors 130 have been inserted into the optical connector couplings 100. Each of those optical connectors 130 terminates an optical fibre (not shown). This fibre can be a drop fibre that leads from the enclosure 1 to a living unit within an MDU, an apartment building or in another premise location, e.g. a classroom in school or university, office, or a hospital room. An optical connector 130 is inserted into the connector coupling 100 from one side of the coupling 100. From the other side of the coupling 100, which is not visible in this Figure, a connector terminating a pigtail fibre can be inserted into the coupling 100. The pigtail fibre and the drop fibre are optically connected to each other by inserting the optical connectors 130 terminating those fibres into the connector coupling 100. Each optical connector 130 is equipped with a boot 140, through which the fibre runs and which protects the fibre against sharp bending in the vicinity of the connector 130.

**Figure 2** is a perspective view of the interior of the enclosure 1 of Figure 1, with the cover 10, the optical connector couplings 100 and the cable retention device 600 removed. A fibre tray 200 is shown fixed to the enclosure base 20. The fibre tray 200 is in the first storage position. It is arranged in a plane parallel to the plane of the support plate 50 of the enclosure base 20, in an elevated position relative to the enclosure base 20. The fibre tray 200 comprises a fibre entry/exit area 210 in the form of an opening, through which a fibre can be routed from the enclosure base 20 into the fibre tray 200 or out of the fibre tray 200 to the enclosure base 20. The fibre tray 200 also comprises a fibre splice area 220, in which the ends of optical fibres can be connected to ends of other optical fibres by splices. An exemplary splice can be a fusion splice or a mechanical splice, such as a 3M™ Fibrlok Single Fiber Optical Splice, available from 3M Company (St. Paul, Minnesota, U.S.). The fibre tray 200 further comprises fibre guiding elements 230, which facilitate guiding optical fibres from the fibre entry/exit region 210 to the splicing area 220 and from the splicing area 220 to the fibre entry/exit region 210 of the cassette. The fibre guiding elements 230 in the fibre tray 200 are shaped suitably to prevent bending of optical fibres below a minimum bending radius. Some fibre guiding elements 230 can guide overlength of optical fibres in the fibre tray 200.

Generally, the fibre tray 200 is elliptic in shape and comprises a carrier plate 240 and a peripheral outer wall 250, which is arranged at an outer edge of the fibre tray 200 and is oriented vertically with respect to the carrier plate 240. The peripheral outer wall 250 is arranged along a large part of the outer edge of the fibre tray 200. Fibre guiding elements 230 are formed on the carrier plate by upstanding walls, around which fibres can be guided.

The fibre tray 200 is pivotably fixed to the enclosure base 20 by fibre tray support means on the enclosure base 20. In the embodiment shown in Figure 2, the fibre tray 200 is fixed to fibre tray support elements 270 on the enclosure base 20 and by two hinge pins 260 on the fibre tray 200. Both hinge pins 260 are located on one side of the fibre tray 200. These hinge pins 260 are connection means for pivotable engagement with the fibre tray support elements 270. Only one hinge pin 260 and one of the tray support elements 270 is visible in Figure 2. Each hinge pin 260 of the fibre tray 200 engages with a tray support element 270, so that the fibre tray 200 can be pivoted about a pivot axis 275 defined by the hinge pins 260. The fibre entry/exit region 210 is arranged on the fibre tray 200 such that it is positioned on or very close to the pivot axis 275 defined by the hinge pins 260. This arrangement prevents fibres entering the fibre tray 200 through the entry/exit region 210 from being overly bent and/or pulled on when the tray 200 is pivoted around the pivot axis 275.

The fibre tray support elements 270 protrude upwards from the support plate 50 of the enclosure base 20. They have a rectangular cross section and comprise, at their upper ends, a clip. The clip has two resilient clip arms, and the clip can receive and embrace the hinge pin 260 between the clip arms, so that the hinge pin 260 can turn freely between the clip arms. The clip arms are shaped to prevent the hinge pin 260 from slipping out of the clip. Although not present in the embodiment shown, the hinge pins 260 and/or the clips may be shaped such that they define a specific pivot position of the fibre tray 200, in which the fibre tray 200 is held by the hinge pins 260 and the clips without further support being required, and in which a moderate mechanical force is required to pivot the fibre tray 200 out of this specific pivot position. This specific pivot position is preferably an access position of the fibre tray 200.

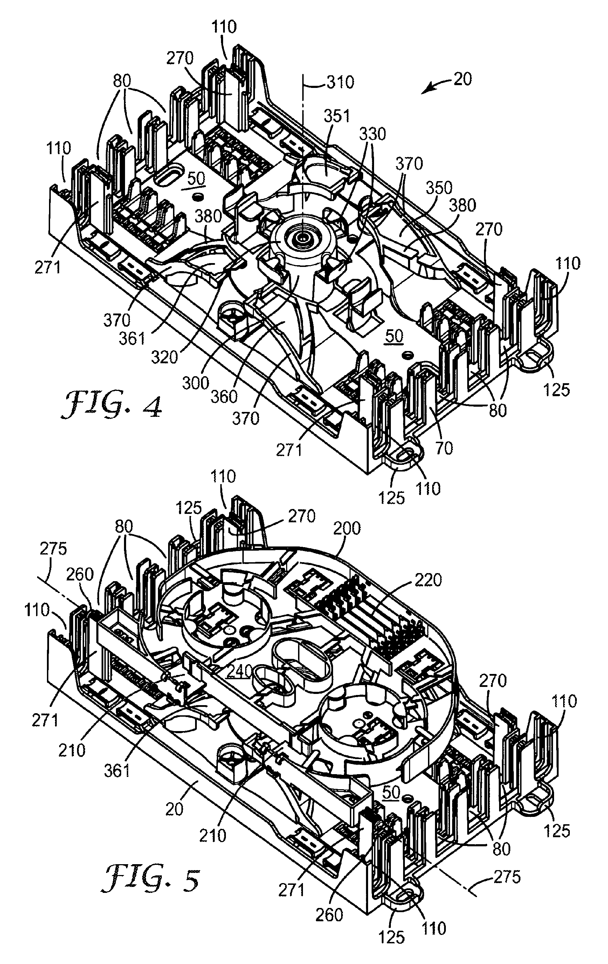

In Figure 2, the fibre tray 200 is shown pivoted into a first tray storage position. In this position, the carrier plate 240 of the fibre tray 200 is oriented parallel to the support plate 50 of the enclosure base 20. The fibre tray 200 is prevented from pivoting further towards the support plate 50 of the enclosure base 20 by a fibre guiding hub 300 (shown in Figure 4) on the enclosure base 20, which supports the centre of the fibre tray 200 in the first storage position.

The support plate 50 of the enclosure base 20 has a rectangular shape and has four straight outer edges. The fibre tray support elements 270 and the hinge pins 260, defining a pivot axis 275, are arranged in the vicinity of the right-hand (in the Figure) outer edge of the enclosure base 20, albeit with a distance to the outer edge, so that they leave space for routing a feeder cable between the outer edge and the fibre tray support elements 270. The fibre tray support elements 270 define the position of the pivot axis 275 relative to the enclosure base 20. The pivot axis 275 is oriented parallel to the outer edge, in the vicinity of which the fibre tray support elements 270 are arranged.

The enclosure 1 provides space, the "storage volume", to accommodate the fibre tray 200 in the enclosure 1 when the fibre tray 200 is in the first storage position. The storage volume is designed to provide space for accommodating the fibre tray 200 such that the cover 10 can be fixed to the enclosure base 20 and the enclosure 1 can thereby be closed, when the fibre tray 200 is in the first storage position.

In the first storage position, the fibre tray 200 occupies a certain space in the storage volume. This space is defined by a virtual outer envelope of the fibre tray 200, such that the space occupied by the fibre tray 200 comprises all solid parts of the fibre tray 200 plus the space between any two solid parts of the fibre tray 200.

In addition to two U-shaped feeder cable openings 110 on the front side of the enclosure base 20, Figure 2 also shows a further feeder cable opening 110 on the rear of the enclosure base 20, opposite to the feeder cable opening 110 on the front side, on the left-hand side of the enclosure base 20 in Figure 2. A further U-shaped feeder cable opening 110 is arranged in the rear wall 280, opposite to the respective feeder cable openings 110 on the front side, appearing on the right-hand side of the Figure. A feeder cable can thus enter into the optical fibre distribution device 1 through one of these feeder cable openings 110 and exit, if necessary, through the corresponding opposite feeder cable opening 110.

The rear side of the enclosure base 20 comprises further drop fibre openings 80, of which one is visible in Figure 2. These further drop fibre openings 80 allow optical cables and fibres to enter the enclosure 1 from the rear.

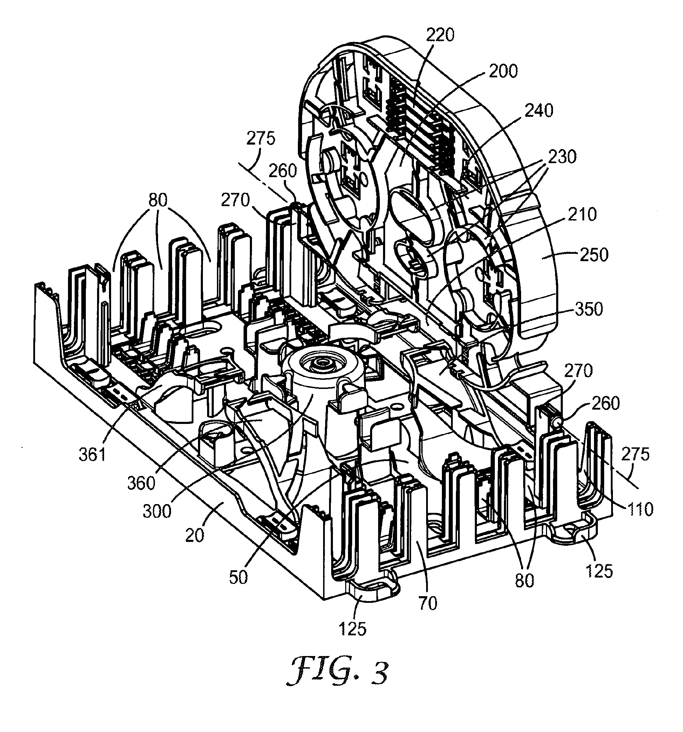

**Figure 3** is a perspective view of the interior of the enclosure 1 of Figure 2. The fibre tray 200 is shown in an access position. The fibre tray 200 is fixed to the enclosure base 20 by the fibre tray support elements 270. The fibre tray 200 has been pivoted by an angle of about 90° around the pivot axis 275 out of the storage position shown in Figure 2 into the access position shown in Figure 3. In this access position, the carrier plate 240 of the fibre tray 200 is oriented at a right angle to the support plate 50 of the enclosure base 20. The fibre entry/exit region 210 of the fibre tray 200, in the access position of the fibre tray 200, is still located in almost the same position as in the storage position of the fibre tray 200, because the fibre entry/exit region 210 is close to the pivot axis 275 defined by the hinge pins 260 of the fibre tray 200.

In the embodiment shown in Figure 3, the fibre tray is a double-sided tray. The fibre tray 200 has two opposite sides. Figure 3 shows the "lower"side of the fibre tray 200, which is oriented towards the enclosure base 20 when the tray 200 is in the storage position. Figure 2 shows the "upper" side of the tray 200, which is the side of the fibre tray 200 which is oriented away from the enclosure base 20 when the tray 200 is in the storage position. The fibre tray 200 comprises on its lower side a fibre splice area 220 and fibre guiding elements 230. Their arrangement is similar to the arrangement of the fibre splice area 220 and of the fibre guiding elements 230 on the upper side of the fibre tray 200. The carrier plate 240 carries on one of its sides the fibre splice area 220 and the fibre guiding elements 230 arranged on the upper side of the tray, and on its opposite side the fibre splice area 220 and the fibre guiding elements 230 arranged on the lower side of the tray 200. An optical fibre entering the fibre tray 200 via the fibre entry/exit region 210 can be guided onto the upper side or onto the lower side of the fibre tray 200.

Although Figure 3 shows a two-sided fibre tray 200, the fibre tray 200 may also be a one-sided fibre tray, which may have a fibre splice area 220 and fibre guiding elements 230 on only one side of the fibre tray 200 or of the carrier plate 240.

**Figure 4** is a perspective view of the interior of the enclosure 1 of Figure 1, with the fibre tray 200 removed, showing more clearly the enclosure base 20 and its elements. The fibre-guiding hub 300 is located close to the geometric centre of the enclosure base 20. It protrudes upwards from the support plate 50 of the enclosure base 20 in a direction defining a hub axis 310. The hub 300 has a generally cylindrical shape and a circular cross section. Its diameter is chosen such that an optical fibre can be guided by the hub 300 without violating the minimum bending radius of the fibre. An optical fibre can be guided around the hub 300 by an angle of 360° or by any smaller angle. The upper face 320 of the hub 300 comprises a threaded aperture for a screw, which can be used to fix the cover 10 of the enclosure 1 to the enclosure base 20. An optical fibre can be guided around the hub 300 at the level of the support plate 50 or at an elevated level, relative to the support plate 50, defined by four hub arms 330. The hub arms 330 protrude radially from the cylindrical outer surface of the hub 300. A fibre is supported by a horizontal portion of a hub arm 330 and is prevented from slipping off the hub arm 330 by a vertical portion of the hub arm 330. In the embodiment shown, overlength of groups of fibres in a common sheath, coming from the feeder cable, can be guided around the hub 300 and stored on the level of the support plate 50, whereas overlength of individual fibres can be guided around the hub 300 and stored on the elevated level. However, individual fibres from the feeder cable may be guided directly to drop fibre openings 80 without being guided around the hub 300. Guiding a fibre around the hub 300 on the level of the support plate 50 may be used for storing overlength of the fibre only, whereas guiding a fibre around the hub 300 on the elevated level may be used for guiding fibres that are to be routed to the fibre tray 200.

The two tray support elements 270 are located on one side (the right side in Figure 4) of the enclosure base 20 for pivotably fixing the fibre tray 200 through the hinge pins 260 to the enclosure base 20, so that the fibre tray 200 can be pivoted into the first storage position. Two further tray support elements 271 are arranged on the opposite side (the left side in Figure 4) of the enclosure base 20, close to the outer edge on the left side of the enclosure base 20. The second set of tray support elements 271 is identical to the first set of tray support elements 270. The tray support elements 270, 271 of both sets have the same height relative to the support plate 50. The second set of tray support elements 271 can be used for pivotably fixing the fibre tray 200 through its hinge pins 260 to the enclosure base 20, such that the fibre tray 200 can be pivoted into the second storage position, shown in Figure 5. In both the first and the second storage position, the central hub 300 supports the centre of the fibre tray 200 and prevents it from pivoting further down towards the support plate 50.

A first fibre ramp 350 and a second fibre ramp 351 can guide a fibre from the enclosure base 20 to the fibre entry/exit region 210 of the fibre tray 200, when the fibre tray 200 is fixed to the enclosure base 20 by the first set of tray support elements 270. The first ramp 350 is arranged to guide a first fibre in a first direction to the entry/exit region 210 of the fibre tray 200 in the first storage position, the second ramp 351 being arranged to guide a second fibre, in a direction generally opposite to the first direction, to the entry/exit region 210 of the fibre tray 200 in the first storage position.

Similarly, a third fibre ramp 360 and a fourth fibre ramp 361 are arranged on the enclosure base 20 such that they can guide a fibre from the enclosure base 20 to the fibre entry/exit region 210 of the fibre tray 200, when the fibre tray 200 is fixed to the enclosure base 20 by the set of second tray support means 271. The third ramp is arranged to guide a third fibre in a third direction to the entry/exit region 210 of the fibre tray 200 mounted in the second storage position, the fourth ramp being arranged to guide a fourth fibre in a direction generally opposite to the third direction to the entry/exit region 210 of the fibre tray 200 mounted in the second storage position.

The first fibre ramp 350 and the second fibre ramp 351 form a first pair of ramps. The third fibre ramp 360 and the fourth fibre ramp 361 form a second pair of ramps. Each fibre ramp 350, 351, 360, 361 provides a surface with continuously varying slope for smoothly leading a fibre from the level of the support plate 50 to the elevated level of the fibre tray 200. The slope is zero at the bottom end and at the top end of each ramp. The slope is chosen such that it respects the minimum bend radius of the fibre. Each ramp 350, 351, 360, 361 is provided with upstanding ramp walls 370 which prevent a fibre from slipping off the ramp. Some ramp walls 370 do not extend along the entire length of a fibre ramp. The distance between the ramp walls 370 is smaller at the top of a ramp than at the bottom of the ramp 350, 351, 360, 361. The ramp walls 370 open up at the bottom of the ramp to form a funnel, so that fibres coming from various directions in the enclosure base 20 can be guided onto the ramp between the ramp walls 370 without violating the minimum bend radius of the fibres.

The upper ends of the ramps 350, 351 are shaped such that a fibre can be guided from the upper end of the ramp into the fibre entry/exit region 210 of the fibre tray 200 in a direction essentially parallel to the pivot axis 275 of the fibre tray 200, when the tray 200 is in the first storage position. When the fibre tray 200 is in the first storage position, a gap remains between the upper end of a ramp 350, 351, and the portion of the carrier plate 240 of the fibre tray 200, where the fibre is entering the fibre tray 200. The gap is small enough to allow the fibre to be unsupported as it enters the tray 200, without violating the minimum bend radius of the fibre. The lower ends of the ramps 350, 351, 360, 361 are shaped such that a fibre can be guided from the lower end of a ramp 350, 360 on the front part of the enclosure base 20 to the lower end of another ramp 360, 350 on the front part of the enclosure base 20, and from the lower end of a ramp 351, 361 on the rear part of the enclosure base 20 to the lower end of another ramp 360, 350 on the rear part of the enclosure base 20 without violating the minimum bend radius of the fibre.

The fibre ramps 350, 351 and the fibre ramps 360, 361 are arranged in pairs, such that the upper ends of two ramps forming a pair of ramps are located next to each other. Independent from the tray support elements 270, 271 used for fixing the fibre tray 200, an optical fibre can be guided from the upper end of one ramp 350, 351 to the upper end of the other ramp 351, 350 of the same pair of ramps without entering the fibre tray 200. Similarly, an optical fibre can be guided from the upper end of one ramp 360, 361 of the other pair of ramps to the upper end of the opposite ramp 361, 360, of the same pair without entering the fibre tray 200. The ramps 350, 351, 360, 361 are arranged around the central hub 300 and encircle it, so that a fibre can be guided by 360°, i.e. a full turn, around the hub 300 over the fibre ramps 350, 351, 360, 361 without violating the minimum bend radius of the fibre.

One of the ramps 350, 351 can guide a fibre into the fibre tray 200 in a direction essentially parallel to the pivot axis 275 in the first storage position, while the other of the ramps 350, 351 can guide a fibre into the fibre tray 200 in an opposite direction. This opposite direction is also essentially parallel to the pivot axis 275, when the fibre tray 200 is in the first storage position. Both directions are essentially collinear with the pivot axis 275. The ramps 360, 361 on the other side of the enclosure base 20 have the same shape and perform the same guiding function when the fibre tray 200 is in the second storage position.

All fibre ramps 350, 351, 360, 361 are equipped with fibre retaining tabs 380 which serve to prevent a fibre from lifting up from the surface of the ramps.

The enclosure base 20 may consist of several pieces. However, in the embodiment shown in Figure 4, the enclosure base 20 is a single piece. In one exemplary aspect, the enclosure base 20 is molded from a plastic material, namely ABS (acrylonitrile butadiene styrene). Alternatively, polycarbonate could be used. The support plate 50 of the enclosure base 20 forms the bottom wall of the enclosure 1. The bottom wall is an outer wall of the enclosure 1. Thus it is not necessary to have a further, separate bottom wall of the enclosure 1. A separate bottom wall may, however, be provided, if the enclosure 1 is required to be entirely closed.

**Figure 5** is a perspective view of the enclosure base 20 of the exemplary fibre distribution enclosure 1 of Figure 1. In Figures 2 and 3, the fibre tray 200 was shown fixed by the first set of tray support elements 270. In Figure 5, the fibre tray 200 is fixed differently. It is pivotably fixed to the enclosure base 20 by the second set of tray support elements 271 of the enclosure base 20. The fibre tray 200 is shown pivoted into the second tray storage position. In this second tray storage position, the carrier plate 240 of the fibre tray 200 is oriented parallel to the support plate 50 of the enclosure base 20. The carrier plate 240 of the fibre tray lies in the same plane in the first tray storage position (shown in Figure 2) and in the second tray storage position (shown in Figure 5).

The enclosure 1 accommodates the fibre tray 200 in the storage volume. The storage volume is designed to provide space for accommodating the fibre tray 200 such that the cover 10 of the fibre-optic distribution enclosure 1 can be fixed to the enclosure base 20 and the enclosure 1 can thereby be closed, when the fibre tray 200 is either in the second or in the first tray storage position.

In Figure 5, the fibre tray 200 pivots about the axis 275 defined by the hinge pins 260 when these hinge pins 260 are engaged with the second set of tray support elements 271. The fibre tray 200 can pivot upwards up to a position in which its carrier plate 240 is at a right angle with respect to the support plate 50 of the enclosure base 20. When the fibre tray 200 is fixed to the enclosure base 20 by the first set of tray support elements 270 (as shown in Figures 2 and 3), the pivot axis 275 is at a position relative to the enclosure base 20 which is different from the position of the pivot axis 275, when the fibre tray 200 is fixed by the second tray support means 271. Thus, when pivoted out of the storage volume, the fibre tray 200 pivots in a different direction. This is an advantage in situations where there is little space over one side of the enclosure 1, but more space over the other side. In such a case, the fibre tray 200 can be removed from the enclosure base 20 by pulling the hinge pins 260 out of the first set of fibre tray support elements 270, turning the fibre tray 200, in the plane of the carrier plate 240, by an angle of 180° around an axis perpendicular to the carrier plate 240, and inserting the hinge pins 260 into the second set of fibre tray support elements 271. Independent of which set of tray support elements 270, 271 is used for fixing the fibre tray 200 to the enclosure base 20, the fibre tray 200 can be pivoted into a storage position in the storage volume of the enclosure 1.

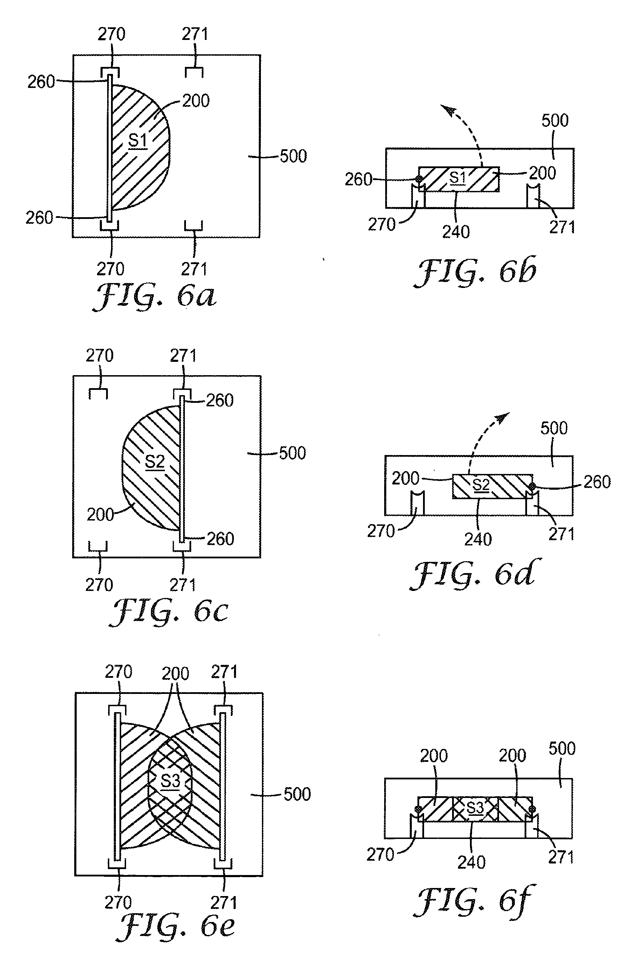

In the first storage position, the fibre tray 200 occupies a certain space S1 in the storage volume of the enclosure 1. This space S1 has a position with respect to the fibre-optic enclosure 1, so S1 is not an amount or volume of space, but it may be defined by three-dimensional coordinates. The volume of this space S1 is the volume of space occupied by the fibre tray 200 in general. The space occupied by the fibre tray 200 comprises the space occupied by the solid parts of the fibre tray 200 plus the space between any two solid parts of the fibre tray 200. In the second storage position, the fibre tray 200 occupies a certain space S2 in the storage volume. Also S2 has a position with respect to the fibre-optic enclosure 1, and it may also be defined by three-dimensional coordinates. The first space S1 and the second space S2 intersect, i.e. the first space S1 and the second space S2 have a space in common. The volume of this common space is more than 30%, namely about 80%, of the volume of space S1. **Figures 6a, 6b, 6c, 6d, 6e, and 6f** are schematic sketches of the storage volume 500 in the fibre-optic distribution enclosure 1, also showing the pivotable fibre tray 200 and its hinge pins 260. The viewing direction is from "above" in Figures 6a, 6c, 6e, and from a side in Figures 6b, 6d, and 6f.

In Figure 6a, the fibre tray 200 is shown in the first tray storage position, in which the tray 200 is fixed to the enclosure base 20 by the first fibre tray support elements 270 such that the hinge pins 260 are located on the left side (in this Figure). The hinge pins 260 define the pivot axis 275. The fibre tray 200 occupies a first space S1, indicated by the first type of hatching. Figure 6b shows the storage volume 500 and the fibre tray 200 of Figure 6a in the same first storage position, seen from a side. The first space S1 occupied by the fibre tray 200 is indicated by the same type of hatching. The volume of the space S1 may be computed for a given geometry of the fibre tray 200 through CAD software or FEM software.

Figure 6c shows the same tray 200 in the same storage volume 500, but the tray 200 is in the second tray storage position, in which the tray 200 is fixed to the enclosure base 20 by the second tray support means 271, such that the hinge pins 260 are located on the right side (in this Figure). In this second tray storage position, the fibre tray 200 occupies a second space S2, indicated by another type of hatching. It is noted that the fibre tray 200 in the second tray storage position shown in Figure 6c has an angular orientation with respect to the storage volume 500 and thereby to the enclosure base 20, which is offset by an angle of 180° from the angular orientation of the fibre tray 200 in the first tray storage position shown in Figure 6a. In the plane of the carrier plate 240, the angular orientation can be expressed as an angle measured about an axis perpendicular to the carrier plate 240. Figure 6d, in side view, indicates, by the same type of hatching, the second space S2 occupied by the fibre tray 200 in the second tray storage position.

Figure 6e and Figure 6f serve to show the space S3, which is the space of the intersection between the first space S1 and the second space S2, i.e. S3 is the space common to the first space S1 and the second space S2. In these Figures 6e and 6f, Figures 6a and 6b appear as overlaid to Figures 6c and 6d, respectively. S3 is indicated by the area where the diagonal lines of both types cross to form a cross-hatched area. The volume of the space S3 may also be computed for a given geometry of the fibre tray 200 through CAD software or FEM software. It should be noted, however, that Figure 6e and Figure 6f show the very same fibre tray 200 in two different tray storage positions. In reality, it is not possible to mount the same tray in two different positions at the same time, and the Figures 6e and 6f are thus only to visualize the space S3 which the first space S1 and the second space S2 have in common.

Figure 6f shows that the carrier plate 240 of the fibre tray 200 lies in the same plane in the first tray storage position and in the second tray storage position.

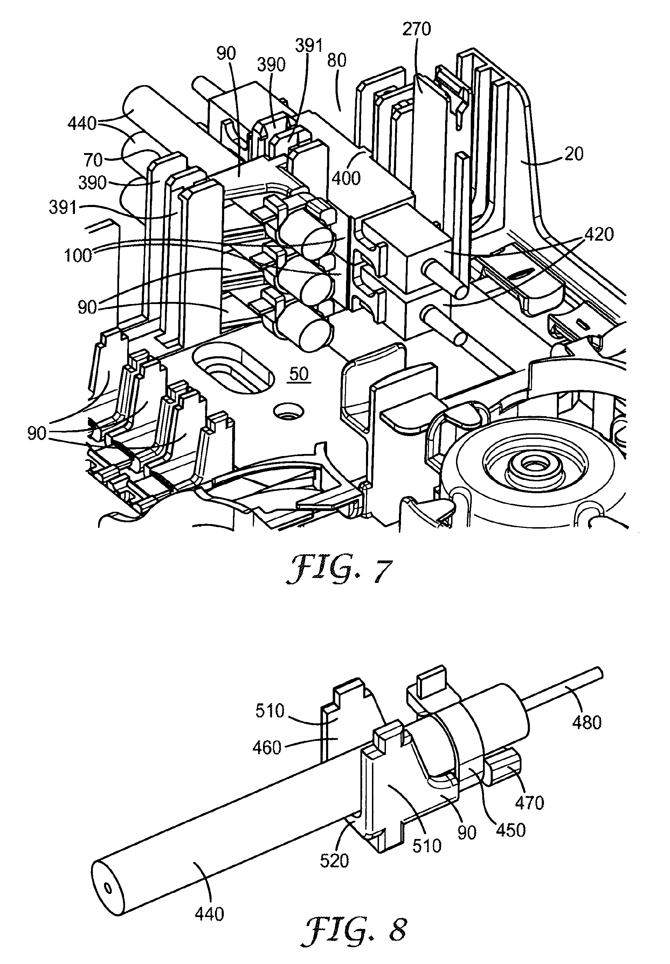

**Figure 7** shows in more detail three cable retention devices 90, mounted in a respective mounting location of the mounting structure 70. Figure 7 is a perspective view from the inside of the enclosure 1, with the cover 10 of the enclosure 1 removed. The mounting structure 70 and two drop cable openings 80 can be seen. Each drop cable opening 80 has the shape of a longitudinal recess and provides three mounting locations. In the left drop cable opening 80, three identical cable retention devices 90 are mounted, one on top of the other. Three optical cables 440 enter the enclosure 1 through the left drop cable opening 80. Each cable retention device 90 fixes one optical cable 440 via a cable tie 450, as shown in more detail in Figure 8.

The mounting structure 70 comprises two longitudinal recesses 390, 391 at each side of each drop cable opening 80, extending from the open, upper end of the drop cable opening 80 to the bottom end of the drop cable opening 80. The recesses 390, 391 on the opposing sides of a drop cable opening 80 face each other. The recesses 390, 391 are shaped and spaced for receiving, accommodating and fixing one or more optical connector couplings 100, in this embodiment standard SC connector couplings 100. The outer recesses 390, arranged towards the outside of the enclosure 1, can receive a cover panel which closes a mounting location in a drop cable opening 80, when that mounting location is not in use. The inner recess 391 is arranged towards the inside of the enclosure 1. It can receive a suitably shaped part of a cable retention device 90 or of an optical connector coupling 100. A cable retention device 90 is shaped suitably that it can be mounted in a mounting location by sliding it into the drop cable opening 80 from the open side of the drop cable opening 80, i.e. from above, such that one part of the cable retention device 90 slides into the inner recess 391 or the outer recess 390 on one side of the drop cable opening 80, while another part of the cable retention device 90 slides into the inner recess 391 or the outer recess 390, respectively, on the opposite side of the drop cable opening 80.

A cover panel for closing a mounting location may, in a similar way, be slided into two opposed outer recesses 390 of a drop cable opening 80. A mounting location may be closed by an individual cover panel, which closes one mounting location, or by a larger cover panel which closes several or all mounting locations of a drop cable opening 80 at the same time.

Figure 7 also shows two identical optical connector couplings 100, mounted in two discrete mounting locations provided by an adjacent drop cable opening 80. The uppermost mounting location of that drop cable opening 80 is unused. Each connector coupling 100 has two protrusions 400 on opposite sides of the connector coupling 100. A connector coupling 100 is mounted by sliding the protrusions 400 into the opposed inner recesses 391 of a drop cable opening 80 from the open side of the drop cable opening 80, i.e. from above. Each connector coupling 100 has latches (not shown) for fixing the connector coupling 100 in the drop cable opening 80 in a horizontal direction. Unused mounting locations can be closed by cover panels (not shown). Once the cover 10 of the enclosure 1 is fixed to the enclosure base 20, the cover 10 prevents connector couplings 100, cable retention devices 90 and/or cover panels from slipping out of the open end of a drop cable opening 80.

For the sake of completeness, it is noted that, in the enclosure base 20 shown in Figure 7, optical connectors 420 are inserted into the connector couplings 100 from the inside of the enclosure 1. Fibres, however, are not shown in the Figure. If the outer side of a connector coupling 100 is not used, a dust cap may be inserted into the connector couplings 100.

Figure 7 shows, at the bottom left, three additional cable retention devices 90, which were manufactured in one piece with the enclosure base 20. They are identical to the cable retention devices 90 shown mounted in the mounting structure 80. These additional cable retention devices 90 are still mechanically connected to the enclosure base 20. When one of these additional cable retention devices 90 is to be used, it can be separated manually from the enclosure base 20. After separation, it may be mounted in a mounting location of the mounting structure 70.

**Figure 8** shows in detail a cable retention device 90, an optical cable 440 and a cable tie 450 which fixes the sheath of the optical cable 440 to the cable retention device 90. The retention device 90 comprises a U-shaped cable entry portion 460 and a longitudinal cable fixing portion 470. The optical cable 440 is guided between the arms of the U-shaped cable entry portion 460. The cable fixing portion 470 is oriented parallel to the incoming optical cable 440 and is shaped to receive the optical cable 440. In the part of the optical cable 440 which is located in the cable fixing portion 470, the cable is opened, and the cable sheath 490 is separated from the optical fibre 480. Although not shown in Figure 8, an excess part of the cable sheath 490 can be bent away from the fibre 480 and may be guided around the cable fixing portion 470 of the retention device 90. The cable sheath 490 is fixed to the cable fixing portion 470 by the cable tie 450, which is tightened around the cable fixing portion 470 and the cable sheath 490. The cable fixing portion 470 provides a notch to accommodate the cable tie 450, so that the cable tie 450 is approximately flush with the adjacent outer surface of the cable retention device 90 and cannot slip off the cable fixing portion 470. Any pull force exerted on the optical cable 440 is thereby conducted into the cable retention device 90 and, when the cable retention device 90 is mounted in the mounting structure 70, further into the mounting structure 70, the enclosure base 20 and the enclosure 1, so that the actual optical fibre 480 is not exposed to pull stress.

The cable entry portion 460 of the cable retention device 90 has a U-shaped profile and comprises two parallel arms 510 and a center bar 520, which connects the arms 510 with each other. The retention device 90 can be mounted in a mounting location of the mounting structure 70 by inserting it into a drop cable opening 80 from the open, upper end of the drop cable opening 80, such that the free ends of the arms 510 slip into one inner recess 391 of the drop cable opening 80, and that the center bar slips into the opposed inner recess 391 of the drop cable opening 80. When the cover 10 has been fixed to the enclosure 1, the cover 10 prevents the cable retention device 90 from slipping out of the drop cable opening 80 in which it is mounted. The cable retention device 90 can be removed from the drop cable opening 80 by removing the cover 10 of the enclosure 1 and pulling the cable retention device 90 upwards towards the open end of the drop cable opening 80, until the cable retention device 90 slips out of the drop cable opening 80.

The cable retention devices 90, shown in Figure 8, can retain optical cables 440 that have no optical connector 420 on the end entering the enclosure 1, i.e. an "unconnectorized" cable 440. Figure 9 shows an alternative cable retention device, a strain relief device 600, which can retain an optical cable 610 that has an optical connector 420, i.e. that can retain a "connectorized" optical cable. The strain relief device 600 has a support body 620 and two fixation wings 630, 631, connected to the support body 620. The support body 620 is shaped to be mountable in one of the mounting locations of the mounting structure 70. It has opposed lateral mounting protrusions 635 which are shaped and spaced such that the strain relief device 600 can be inserted into a drop cable opening 80 from the open end of the drop cable opening 80, i.e. from above, such that the mounting protrusions 635 slip into the opposed outer recesses 390 of the drop cable opening 80, with the fixation wings 630, 631 being located outside of the enclosure 1. When the cover 10 has been fixed to the enclosure 1, the cover 10 prevents the strain relief devices 600 from slipping out of the drop cable opening 80 in which they are mounted.

The strain relief device 600 is to be mounted in a mounting location of the mounting structure 70 directly above or directly below a mounting location, in which an optical connector coupling 100 is mounted, i.e. in the same drop cable opening 80. If an optical connector 420 of a connectorized optical cable 610 is inserted into the connector coupling 100 from outside the enclosure 1, the optical cable 610 can be fixed to the fixation wings 630, 631 by cable ties 650. For that purpose, the fixation wings 630, 631 are long enough to extend, in the direction of the optical cable 610, beyond the optical connector 420 and the cable boot 140 of the optical connector 420. A cable tie 650 can be used to fix a connectorized optical cable 610 to one of the fixation wings 630, 631. For that purpose, the fixation wings 630, 631 comprise notches 640, with which a cable tie 650 can engage, and which prevent the cable tie 650 from slipping off the fixation wing 630, 631 to which it fixes the cable 610.

The strain relief device 600 further comprises a cover panel 660, extending from the support body 620 in the direction of the mounting protrusions 635. The cover panel 660 is an optional part of the strain relief device 600, and a strain relief device 600 may have no cover panel 660. The cover panel 660 closes a mounting location of the mounting structure 70 above or below the mounting location, in which the support body 620 of the strain relief device 600 is mounted. The strain relief device 600 with the cover panel 660 in place thus occupies two mounting locations in the same drop cable opening 80. In case that the mounting location below or above the mounting location of the support body 620 is needed for mounting a further connector coupling 100, the cover panel 660 can be easily removed from the support body 620 by manually breaking it off the support body 620. This manual breaking is facilitated by a predetermined breaking line 670 between the cover panel 660 and the support body 620.

**Figure 10** shows the strain relief device 600 of Figure 9 mounted in the mounting structure 70 of the enclosure 1 of Figure 1 above an optical connector coupling 100. An optical connector 420 is shown inserted into the coupling 100 mounted below the strain relief device 600. The connectorized cable 610 connected to that connector 420 is fixed to the lower fixation wing 631 of the strain relief device 600 by a cable tie 650 secured around the optical cable 610 and the lower fixation wing 630 in the position of the notch 640. Any pull force on the optical cable 610 is thereby conducted into the lower fixation wing 631 of the strain relief device 600, further into the support body 640 and on into the mounting structure 70, the enclosure base 20 and into the enclosure 1. A pull force on the optical cable 610 thereby does not create a pull force on the optical connector 420.

If the cover panel 660 of the strain relief device 600 is removed, a further optical connector coupling 100 may be mounted in the mounting location above the mounting location in which the support body 620 of the strain relief device 600 is mounted. If a further optical connector 420 (not shown in this Figure) is inserted into the coupling 100 mounted above the strain relief device 600, a connectorized cable 610 connected to that connector 420 can be fixed to the upper fixation wing 630 of the strain relief device 600 by a cable tie 650 secured around the optical cable 610 and the upper fixation wing 630 in the position of the notch 640.

## Claims

1. Fibre-optic distribution enclosure, comprising
a fibre tray (200) having a flat carrier plate (240),
a storage volume (500) for storing the fibre tray (200) in the fibre-optic distribution enclosure (1) when the fibre tray (200) is in a first tray storage position, and
first fibre tray support means (270) for movably fixing the fibre tray (200) in the enclosure (1), such that the fibre tray (200) can be moved into the first tray storage position in the storage volume (500),
wherein
the enclosure (1) comprises second fibre tray support means (271) for movably fixing the fibre tray (200) in the enclosure (1), such that the fibre tray (200) can be moved into a second tray storage position in the storage volume (500), and
such that the fibre tray (200) occupies a first space (S1) in the first storage position, and a second space (S2) in the second storage position, and that the first space (S1) and the second space (S2) intersect, and
wherein the carrier plate (240) lying in a first plane when the fibre tray (200) is in the first tray storage position, and lying in a second plane when the fibre tray (200) is in the second tray storage position, **characterized by** the first plane and the second plane being identical.

2. Fibre-optic distribution enclosure according to claim 1, wherein the first fibre tray support means (270) is/are suitable for pivotably fixing the fibre tray (200) in the enclosure (1), such that the fibre tray (200) can be pivoted into the first tray storage position,
and wherein the second fibre tray support means (271) is/are suitable for pivotably fixing the fibre tray (200) in the enclosure (1), such that the fibre tray (200) can be pivoted into the second tray storage position.

3. Fibre-optic distribution enclosure according to claim 2, wherein the first fibre tray support means (270) is/are arranged such that the fibre tray (200) can be pivoted into the first tray storage position in a first direction of rotation, and wherein the second fibre tray support means (271) is/are arranged such that the fibre tray (200) can be pivoted into the second tray storage position in a second direction of rotation, the second direction of rotation being opposite to the first direction of rotation.

4. Fibre-optic distribution enclosure according to any one of the preceding claims, wherein the carrier plate (240), in the first tray storage position, has a first angular orientation with respect to the enclosure (1) in the plane of the carrier plate (240), and wherein the carrier plate (240) of the fibre tray (200), in the second tray storage position, has a second angular orientation with respect to the enclosure (1) in the plane of the carrier plate (240), wherein the first and the second angular orientations arc offset by an angle which is a multiple of 90°.

5. Fibre-optic distribution enclosure according to any one of the preceding claims, wherein the enclosure (1) comprises a mounting structure (70) comprising a plurality of discrete mounting locations, adapted for mounting optical connector couplings (100) therein.

6. Fibre-optic distribution enclosure according to claim 5, further comprising a cable retention device (90, 600), adapted to be mounted in one of the discrete mounting locations for mounting optical connector couplings (100) therein.

7. Fibre-optic distribution enclosure according to any one of the preceding claims, further comprising an enclosure base (20), wherein the first fibre tray support means (270) and/or the second fibre tray support means (271) is/are connected to the enclosure base (20).

8. Fibre-optic distribution enclosure according to claim 7, wherein the enclosure base (20) comprises optical fibre management means (300, 330).

9. Fibre-optic distribution enclosure according to any one of claims 7 or 8, wherein the enclosure base (20) comprises a first outer edge and an opposite second outer edge, and wherein the first fibre tray support means (270) is/are arranged in the vicinity of the first outer edge, and wherein the second fibre tray support means (271) is/are arranged in the vicinity of the second outer edge.

10. Fibre-optic distribution enclosure according to any one of claims 7 through 9, wherein the fibre tray (200) comprises a fibre entry/exit region (210), through which a fibre can be routed from the enclosure base (20) to the fibre tray (200) or out of the fibre tray (200) to the enclosure base (20),
and wherein the enclosure base (20) comprises a first pair of ramps, wherein the first pair of ramps comprises first and second ramps (350, 351), the first ramp (350) being arranged to guide a first fibre in a first direction to the entry/exit region (210) of the fibre tray (200) in the first storage position, the second ramp (351) being arranged to guide a second fibre, in a direction generally opposite to the first direction, to the entry/exit region (210) of the fibre tray (200) in the first storage position.

11. Fibre-optic distribution enclosure according to claim 10, wherein the enclosure base (20) comprises a second pair of ramps, wherein the second pair of ramps comprises third and fourth ramps (360,361), the third ramp (360) being arranged to guide a third fibre in a third direction to the entry/exit region (210) of the fibre tray (200) mounted in the second storage position, the fourth ramp (361) being arranged to guide a fourth fibre in a direction generally opposite to the third direction to the entry/exit region (210) of the fibre tray (200) mounted in the second storage position.

12. Fibre-optic distribution enclosure according to any one of claims 7 through 11, wherein the enclosure base (20) is a single piece.

13. Fibre-optic distribution enclosure according to any one of claims 7 through 12, wherein a part of the enclosure base (20) forms at least a part of an outer wall of the enclosure (1).

14. Fibre-optic distribution enclosure according to any one of claims 7 through 13, wherein the enclosure base (20) comprises fixing means (125) for fixing the enclosure base (20) directly to a wall.

15. Fibre-optic distribution enclosure according to any one of claims 7 through 14, wherein the enclosure base (20) has a flat support plate (50), and wherein the enclosure base (20) is symmetric with respect to a plane perpendicular to the support plate (50).

## Patentansprüche

1. Glasfaserverteilergehäuse, umfassend
eine Faserkassette (200), die eine flache Trägerplatte (240) aufweist,
ein Aufbewahrungsvolumen (500) zum Aufbewahren der Faserkassette (200) in dem Glasfaserverteilergehäuse (1), wenn sich die Faserkassette (200) in einer ersten Kassettenaufbewahrungsposition befindet, und
erste Faserkassetten-Stützmittel (270) zur beweglichen Befestigung der Faserkassette (200) in dem Gehäuse (1) derart, dass die Faserkassette (200) in die erste Kassettenaufbewahrungsposition in dem Aufbewahrungsvolumen (500) bewegt werden kann,
wobei
das Gehäuse (1) zweite Faserkassetten-Stützmittel (271) zur beweglichen Befestigung der Faserkassette (200) in dem Gehäuse (1) derart umfasst, dass die Faserkassette (200) in eine zweite Kassettenaufbewahrungsposition in dem Aufbewahrungsvolumen (500) bewegt werden kann, und
derart, dass die Faserkassette (200) einen ersten Raum (S1) in der ersten Aufbewahrungsposition und einen zweiten Raum (S2) in der zweiten Aufbewahrungsposition einnimmt und dass der erste Raum (S1) und der zweite Raum (S2) sich überschneiden, und
wobei die Trägerplatte (240) in einer ersten Ebene liegt, wenn sich die Faserkassette (200) in der ersten Kassettenaufbewahrungsposition befindet, und in einer zweiten Ebene liegt, wenn sich die Faserkassette (200) in der zweiten Kassettenaufbewahrungsposition befindet, **dadurch gekennzeichnet, dass** die erste Ebene und die zweite Ebene identisch sind.

2. Glasfaserverteilergehäuse nach Anspruch 1, wobei das erste bzw. die ersten Faserkassetten-Stützmittel (270) dazu geeignet ist bzw. sind, die Faserkassette (200) derart drehbar in dem Gehäuse (1) zu befestigen, dass die Faserkassette (200) in die erste Kassettenaufbewahrungsposition gedreht werden kann,
und wobei das zweite bzw. die zweiten Faserkassetten-Stützmittel (271) dazu geeignet ist bzw. sind, die Faserkassette (200) derart drehbar in dem Gehäuse (1) zu befestigen, dass die Faserkassette (200) in die zweite Kassettenaufbewahrungsposition gedreht werden kann.

3. Glasfaserverteilergehäuse nach Anspruch 2, wobei das erste bzw. die ersten Faserkassetten-Stützmittel (270) derart angeordnet ist bzw. sind, dass die Faserkassette (200) in einer ersten Drehrichtung in die erste Kassettenaufbewahrungsposition gedreht werden kann, und wobei das zweite bzw. die zweiten Faserkassetten-Stützmittel (271) derart angeordnet ist bzw. sind, dass die Faserkassette (200) in einer zweiten Drehrichtung in die zweite Kassettenaufbewahrungsposition gedreht werden kann, wobei die zweite Drehrichtung der ersten Drehrichtung entgegengesetzt ist.

4. Glasfaserverteilergehäuse nach einem der vorstehenden Ansprüche, wobei die Trägerplatte (240) in der ersten Kassettenaufbewahrungsposition eine erste Winkelausrichtung in Bezug auf das Gehäuse (1) in der Ebene der Trägerplatte (240) aufweist und wobei die Trägerplatte (240) der Faserkassette (200) in der zweiten Kassettenaufbewahrungsposition eine zweite Winkelausrichtung in Bezug auf das Gehäuse (1) in der Ebene der Trägerplatte (240) aufweist, wobei die erste und die zweite Winkelausrichtung um einen Winkel gegeneinander versetzt sind, der ein Vielfaches von 90° ist.

5. Glasfaserverteilergehäuse nach einem der vorstehenden Ansprüche, wobei das Gehäuse (1) eine Befestigungsstruktur (70) umfasst, die mehrere diskrete Befestigungsstellen umfasst, die dazu konzipiert sind, optische Steckverbinderkupplungen (100) darin zu befestigen.

6. Glasfaserverteilergehäuse nach Anspruch 5, das ferner eine Kabelhaltevorrichtung (90, 600) umfasst, die dazu konzipiert ist, in einer der diskreten Befestigungsstellen zur Befestigung von optischen Steckverbinderkupplungen (100) darin befestigt zu werden.

7. Glasfaserverteilergehäuse nach einem der vorstehenden Ansprüche, das ferner eine Gehäusebasis (20) umfasst, wobei das erste bzw. die ersten Faserkassetten-Stützmittel (270) und/oder das zweite bzw. die zweiten Faserkassetten-Stützmittel (271) mit der Gehäusebasis (20) verbunden ist bzw. sind.

8. Glasfaserverteilergehäuse nach Anspruch 7, wobei die Gehäusebasis (20) Glasfasermanagement-Mittel (300, 330) umfasst.

9. Glasfaserverteilergehäuse nach einem der Ansprüche 7 oder 8, wobei die Gehäusebasis (20) einen ersten Außenrand und einen gegenüberliegenden zweiten Außenrand umfasst und wobei das erste bzw. die ersten Faserkassetten-Stützmittel (270) in der Nähe des ersten Außenrands angeordnet ist bzw. sind und wobei das zweite bzw. die zweiten Faserkassetten-Stützmittel (271) in der Nähe des zweiten Außenrands angeordnet ist bzw. sind.

10. Glasfaserverteilergehäuse nach einem der Ansprüche 7 bis 9, wobei die Faserkassette (200) einen Fasereintritts-/-austrittsbereich (210) umfasst, durch den eine Faser von der Gehäusebasis (20) zu der Faserkassette (200) oder aus der Faserkassette (200) zu der Gehäusebasis (20) geführt werden kann
und wobei die Gehäusebasis (20) ein erstes Paar Rampen umfasst, wobei das erste Paar Rampen erste und zweite Rampen (350, 351) umfasst, wobei die erste Rampe (350) so angeordnet ist, dass sie eine erste Faser in einer ersten Richtung zu dem Eintritts-/Austrittsbereich (210) der Faserkassette (200) in der ersten Aufbewahrungsposition führt, wobei die zweite Rampe (351) so angeordnet ist, dass sie eine zweite Faser in einer im Allgemeinen der ersten Richtung entgegengesetzten Richtung zu dem Eintritts-/Austrittsbereich (210) der Faserkassette (200) in der ersten Aufbewahrungsposition führt.

11. Glasfaserverteilergehäuse nach Anspruch 10, wobei die Gehäusebasis (20) ein zweites Paar Rampen umfasst, wobei das zweite Paar Rampen dritte und vierte Rampen (360, 361) umfasst, wobei die dritte Rampe (360) so angeordnet ist, dass sie eine dritte Faser in einer dritten Richtung zu dem Eintritts-/Austrittsbereich (210) der in der zweiten Aufbewahrungsposition angebrachten Faserkassette (200) führt, wobei die vierte Rampe (361) so angeordnet ist, dass sie eine vierte Faser in einer im Allgemeinen der dritten Richtung entgegengesetzten Richtung zu dem Eintritts-/Austrittsbereich (210) der in der zweiten Aufbewahrungsposition angebrachten Faserkassette (200) führt.

12. Glasfaserverteilergehäuse nach einem der Ansprüche 7 bis 11, wobei die Gehäusebasis (20) ein einzelnes Stück ist.

13. Glasfaserverteilergehäuse nach einem der Ansprüche 7 bis 12, wobei ein Teil der Gehäusebasis (20) wenigstens einen Teil einer Außenwand des Gehäuses (1) bildet.

14. Glasfaserverteilergehäuse nach einem der Ansprüche 7 bis 13, wobei die Gehäusebasis (20) Befestigungsmittel (125) zum Befestigen der Gehäusebasis (20) direkt an einer Wand umfasst.

15. Glasfaserverteilergehäuse nach einem der Ansprüche 7 bis 14, wobei die Gehäusebasis (20) eine flache Trägerplatte (50) aufweist und wobei die Gehäusebasis (20) symmetrisch in Bezug auf eine Ebene ist, die senkrecht zu der Trägerplatte (50) verläuft.

## Revendications

1. Enceinte de distribution de fibres optiques, comprenant
un plateau à fibres (200) possédant une plaque de support plate (240),
un volume de stockage (500) destiné au stockage du plateau à fibres (200) dans l'enceinte de distribution de fibres optiques (1) lorsque le plateau à fibres (200) est dans une première position de stockage de plateau, et
un premier moyen de support de plateau à fibres (270) pour fixer de manière mobile le plateau à fibres (200) dans l'enceinte (1), de telle sorte que le plateau à fibres (200) peut être déplacé dans la première position de stockage de plateau dans le volume de stockage (500),
dans laquelle
l'enceinte (1) comprend un deuxième moyen de support de plateau à fibres (271) pour fixer de manière mobile le plateau à fibres (200) dans l'enceinte (1), de telle sorte que le plateau à fibres (200) peut être déplacé dans une deuxième position de stockage de plateau dans le volume de stockage (500), et
de telle sorte que le plateau à fibres (200) occupe un premier espace (S1) dans la première position de stockage, et un deuxième espace (S2) dans la deuxième position de stockage, et que le premier espace (S1) et le deuxième espace (S2) se croisent, et
dans laquelle la plaque de support (240) se trouve dans un premier plan lorsque le plateau à fibres (200) est dans la première position de stockage de plateau, et se trouve dans un deuxième plan lorsque le plateau à fibres (200) est dans la deuxième position de stockage de plateau, **caractérisée en ce que** le premier plan et le deuxième plan sont identiques.

2. Enceinte de distribution de fibres optiques selon la revendication 1, dans laquelle le(s) premier(s) moyen(s) de support de plateau à fibres (270) est/sont approprié(s) pour fixer de façon pivotante le plateau à fibres (200) dans l'enceinte (1), de telle sorte que le plateau à fibres (200) peut être pivoté dans la première position de stockage de plateau,
et dans laquelle le(s) deuxième(s) moyen(s) de support de plateau à fibres (271) est/sont approprié(s) pour fixer de façon pivotante le plateau à fibres (200) dans l'enceinte (1), de telle sorte que le plateau à fibres (200) peut être pivoté dans la deuxième position de stockage de plateau.

3. Enceinte de distribution de fibres optiques selon la revendication 2, dans laquelle le(s) premier(s) moyen(s) de support de plateau à fibres (270) est/sont disposé(s) de telle sorte que le plateau à fibres (200) peut être pivoté dans la première position de stockage de plateau dans une première direction de rotation, et dans laquelle le(s) deuxième(s) moyen(s) de support de plateau à fibres (271) est/sont disposé(s) de telle sorte que le plateau à fibres (200) peut être pivoté dans la deuxième position de stockage de plateau dans une deuxième direction de rotation, la deuxième direction de rotation étant opposée à la première direction de rotation.

4. Enceinte de distribution de fibres optiques selon l'une quelconque des revendications précédentes, dans laquelle la plaque de support (240), dans la première position de stockage de plateau, a une première orientation angulaire par rapport à l'enceinte (1) dans le plan de la plaque de support (240), et dans laquelle la plaque de support (240) du plateau à fibres (200), dans la deuxième position de stockage de plateau, a une deuxième orientation angulaire par rapport à l'enceinte (1) dans le plan de la plaque de support (240), dans laquelle les première et deuxième orientations angulaires sont décalées selon un angle qui est un multiple de 90°.

5. Enceinte de distribution de fibres optiques selon l'une quelconque des revendications précédentes, où l'enceinte (1) comprend une structure de montage (70) comprenant une pluralité d'emplacements de montage distincts, adaptés pour y monter des couplages de connecteur optique (100).

6. Enceinte de distribution de fibres optiques selon la revendication 5, comprenant en outre un dispositif de rétention de câble (90, 600), adapté pour être monté dans un des emplacements de montage distincts pour y monter les couplages de connecteur optique (100).

7. Enceinte de distribution de fibres optiques selon l'une quelconque des revendications précédentes, comprenant en outre une base d'enceinte (20), dans laquelle le premier moyen de support de plateau à fibres (270) et/ou le deuxième moyen de support de plateau à fibres (271) est/sont relié(s) à la base d'enceinte (20).

8. Enceinte de distribution de fibres optiques selon la revendication 7, dans laquelle la base d'enceinte (20) comprend un moyen de gestion de fibres optiques (300, 330).

9. Enceinte de distribution de fibres optiques selon l'une quelconque des revendications 7 ou 8, dans laquelle la base d'enceinte (20) comprend un premier bord externe et un deuxième bord externe opposé, et dans laquelle le(s) premier(s) moyen(s) de support de plateau à fibres (270) est/sont disposé(s) au voisinage du premier bord externe, et dans laquelle le(s) deuxième(s) moyen(s) de support de plateau à fibres (271) est/sont disposé(s) au voisinage du deuxième bord externe.

10. Enceinte de distribution de fibres optiques selon l'une quelconque des revendications 7 à 9, dans laquelle le plateau à fibres (200) comprend une région d'entrée/sortie de fibre (210), à travers laquelle une fibre peut être acheminée de la base d'enceinte (20) au plateau à fibres (200) ou hors du plateau à fibres (200) vers la base d'enceinte (20),
et dans laquelle la base d'enceinte (20) comprend une première paire de rampes, dans laquelle la première paire de rampes comprend des première et deuxième rampes (350, 351), la première rampe (350) étant disposée pour guider une première fibre dans une première direction vers la région d'entrée/sortie (210) du plateau à fibres (200) dans la première position de stockage, la deuxième rampe (351) étant disposée pour guider une deuxième fibre, dans une direction généralement opposée à la première direction, vers la région d'entrée/sortie (210) du plateau à fibres (200) dans la première position de stockage.

11. Enceinte de distribution de fibres optiques selon la revendication 10, dans laquelle la base d'enceinte (20) comprend une deuxième paire de rampes, dans laquelle la deuxième paire de rampes comprend des troisième et quatrième rampes (360, 361), la troisième rampe (360) étant disposée pour guider une troisième fibre dans une troisième direction vers la région d'entrée/sortie (210) du plateau à fibres (200) monté dans la deuxième position de stockage, la quatrième rampe (361) étant disposée pour guider une quatrième fibre dans une direction généralement opposée à la troisième direction vers la région d'entrée/sortie (210) du plateau à fibres (200) monté dans la deuxième position de stockage.

12. Enceinte de distribution de fibres optiques selon l'une quelconque des revendications 7 à 11, dans laquelle la base d'enceinte (20) est une pièce unique.

13. Enceinte de distribution de fibres optiques selon l'une quelconque des revendications 7 à 12, dans laquelle une partie de la base d'enceinte (20) forme au moins une partie d'une paroi externe de l'enceinte (1).

14. Enceinte de distribution de fibres optiques selon l'une quelconque des revendications 7 à 13, dans laquelle la base d'enceinte (20) comprend un moyen de fixation (125) pour fixer la base d'enceinte (20) directement à un mur.

15. Enceinte de distribution de fibres optiques selon l'une quelconque des revendications 7 à 14, dans laquelle la base d'enceinte (20) comporte une plaque de support plate (50), et dans laquelle la base d'enceinte (20) est symétrique par rapport à un plan perpendiculaire à la plaque de support (50).
